Europäisches Patentamt

European Patent Office

Office européen des brevets

(19)

(11) Veröffentlichungsnummer: **0 008 000**
**B1**

(12) **EUROPÄISCHE PATENTSCHRIFT**

(45) Veröffentlichungstag der Patentschrift: **09.03.83**

(51) Int. Cl.³: **F 16 L 37/06**

(21) Anmeldenummer: **79102269.2**

(22) Anmeldetag: **04.07.79**

(54) Hochdruck-Schnellanschlusskupplung zum Anschliessen von Feuerlöschschläuchen oder dergleichen an Wasserhähne von Druckwasserleitungen.

(30) Priorität: **11.08.78 DE 2835235**
**31.08.78 DE 2838074**

(43) Veröffentlichungstag der Anmeldung:
**20.02.80 Patentblatt 80/4**

(45) Bekanntmachung des Hinweises auf die Patenterteilung:
**09.03.83 Patentblatt 83/10**

(84) Benannte Vertragsstaaten:
**BE CH FR GB IT LU NL SE**

(56) Entgegenhaltungen:
**AT - B - 183 286**
**DE - A - 2 426 790**
**DE - C - 67 097**
**DE - C - 755 052**
**DE - U - 1 625 439**
**DE - U - 1 977 263**
**DK - C - 9 440**
**US - A - 2 071 780**
**US - A - 2 493 577**
**US - A - 2 507 535**

(73) Patentinhaber: **Hirmer, Sigmund**
**Kirchbachlweg 19**
**D-8201 Riedering (DE)**

(72) Erfinder: **Hirmer, Sigmund**
**Kirchbachlweg 19**
**D-8201 Riedering (DE)**

(74) Vertreter: **Wey, Hans-Heinrich, Dipl.-Ing. et al,**
**Patentanwälte Müller-Börner Wey & Körner**
**Widenmayerstrasse 49**
**D-8000 München 22 (DE)**

Hochdruck-Schnellanschlußkupplung zum Anschließen von Feuerlöschschläuchen od.dgl. an Wasserhähne von Druckwasserleitungen

Die Erfindung betrifft eine Hochdruck-Schnellanschlußkupplung zum Anschließen von Feuerlöschschläuchen od.dgl. an Wasserhähne von Druckwasserleitungen, welche

a) aus einem trichterförmigen Schlauchanschlußstück mit einem Schlauchanschlußstutzen an der engeren Öffnung und mit einem nach außen umgebogenen Rand an der weiteren Öffnung, und

b) aus einem elastischen Dichtungselement mit einer die weitere Öffnung des Schlauchanschlußstücks abdeckenden, elastischen Membrane und mit einem äußeren Ringwulst, der eine radial nach innen offene Ringnut aufweist, in die der Rand des schlauchanschlußstücks eingreift, wobei die Membrane eine Mittelöffnung mit einem kleineren Durchmesser als dem kleinsten Durchmesser der darin aufzunehmenden Ausläufe der Wasserhähne aufweist,

besteht.

Eine derartige Schnellanschlußkupplung ist bereits aus der DE—A—2426 790 bekanntgeworden, die jedoch den Nachteil hat, daß die das trichterförmige Anschlußgehäuse an seiner Oberseite abschließende und mit einer zentralen Öffnung versehene Membrane nicht für eine ausreichende Abdichtung insbesondere gegen den an der außenseite glattwandigen Auslauf eines Wasserhahnes sorgt, so daß bei Erreichen eines bestimmten, aber noch relativ niedrigen Wasserdruckes bereits Wasserstrahlen zwischen der Membrane und dem Hahnauslauf austreten. Dies beruht darauf, daß sich die Membrane nach außen wölbt, wodurch sich die zentrale Öffnung vergrößert. Auch besteht die Gefahr, daß die Membrane von dem trichterförmigen Gehäuse leicht abspringt. Somit ist diese vorbekannte Anschlußkupplung für die Praxis wenig geeignet.

Wie aus einer Vielzahl von den Stand der Technik dokumentierenden Literaturstellen hervorgeht, dürften Schnellanschlußkupplungen für Wasserhähne, insbesondere in Wohngebäuden, schon vor einem halben Jahrhundert gebräuchlich gewesen sein, wenn man unterstellt, daß die aus der Literatur bekanntgewordenen Geräte eine praktische Anwendung erfahren haben. Solange in damaliger Zeit Wasserhähne mit Ausläufen versehen waren, die einen kreisrunden Querschnitt aufwiesen und die im wesentlichen den gleichen Durchmesser besaßen, waren diese möglicherweise brauchbar. Einige dieser z.T. auch komplizierten Anschlußkupplungen besaßen bereits ein schurzartiges, sich von der Membrane in den Innenraum erstreckendes, sich an den Wasserhahnauslauf anlegendes Schlauchstück sowie z.T. auch die Membrane überdeckende Ringscheiben (z.B. US—A—2 493 577), doch waren sie konstruktiv anders ausgebildet als der Gegenstand der Erfindung.

In heutiger Zeit haben die Ausläufe von Wasserhähnen in Wohngebäuden unterschiedlichste Formen und Querschnitte, die, will man eine universell anwendbare Schnellanschlußkupplung für Feuerlöschschläuche schaffen, berücksichtigt werden müssen, wenn man erreichen will, daß die Kupplung stets eine unbedingt erforderliche Dichtheit gegen austretendes Wasser besitzt, und zwar unhabhängig von dem jeweils herrschenden Wasserdruck. Aus der Vielzahl von vorbekannten Kupplungen sind verschiedene Merkmale bereits bekannt geworden, doch weist jedes Gerät für sich Mängel auf, welche dessen Anwendbarkeit unter dem Gesichtspunkt der universellen Anschließbarkeit ausschließen.

Der Erfindung liegt die Aufgabe zugrunde, eine Schnellanschlußkupplung für das rasche Anschließen von Feuerlöschschläuchen an an der Außenseite glattwandige Ausläufe von Wasserhähnen von Druckwasserleitungen in Wohngebäuden zu schaffen, durch welche es möglich ist, im Falle eines Brandes diesen im Entstehungsstadium durch Selbsthilfe unverzüglich zu löschen. Die in Betracht kommende Schnellanschlußkupplung soll die vorerwähnten, z.T. erheblichen Mängel der vorbekannten Geräte nicht aufweisen und universell an jedweden üblichen Wasserhahn anschließbar sein, und zwar so, daß die Abdichtung vollauf gewährleistet ist, um einerseits ein Austreten von Wasser an der Anschlußstelle zu verhindern und andererseits den Wasserdruck in der Druckwasserleitung voll ausnutzen zu können.

Zur lösung dieser Aufgabe wird gemäß der Erfindung vorgeschlagen, eine Hochdruck-Schnellanschlußkupplung der in Betracht kommenden und erwähnten Art in der Weise auszubilden, daß diese die nachstehend genannten weiteren und den Erfolge gewährleistenden Merkmale in Kombination miteinander aufweist:

c) Die Membrane des elastischen Dichtungselements ist mit einem Schlauchstück versehen, welches vom Rand der Mitteloffnung ausgehend schurzartig in dem Innenraum des Schlauchanschlußstücks hineinragt und dessen Wandstärke wie auch dessen lichte Weite von außen nach innen zu abnehmen.

d) Ein Verstärkungselement, bestehend aus einer Ringscheibe mit einer Mittelöffnung, einem am äußeren Rand der Ringscheibe angeordneten zylindrischen Bund und einem am unteren Ende des zylindrischen Bundes radial nach innen vorstehenden Rand, deckt die Membrane auf deren Außenseite mit seiner Ringscheibe ab, wobei der periphere Randbereich der Ringscheibe, der Bund und der Rand den äußeren Ringwulst des Elastischen Dichtungselements übergreifen.

Somit ist das Dichtungselement bei jedwedem Druck im Innenraum des Schlauchanschlußstücks in seiner Lage gesichert.

Um die Universalität der Schlauchanschlußkupplung dahingehend zu erweitern, daß diese auch an Wasserhahnausläufe ungewöhnlicher Querschnittsform anpaßbar ist, ist in weiterer Ausbildung der Erfindung das das Schlauchanschlußstück abdeckende elastische Verstärkungselement auswechselbar und mittels eines geteilten, abnehmbaren Verstärkungselements abgedeckt, deren beide Teile mittels eines Verbindungs- und Spannmechanismus zusammengehalten werden. Dieser kann beispielsweise aus einem Spannband bestehen, welches in einer Nut am Außenumfang des zylindrischen Bundes des Verstärkungselements liegt. Es können aber auch ein Schnellspannverschluß oder Spannschrauben vorgesehn werden, um die beiden Teile des Verstärkungselements zusammenzuspannen.

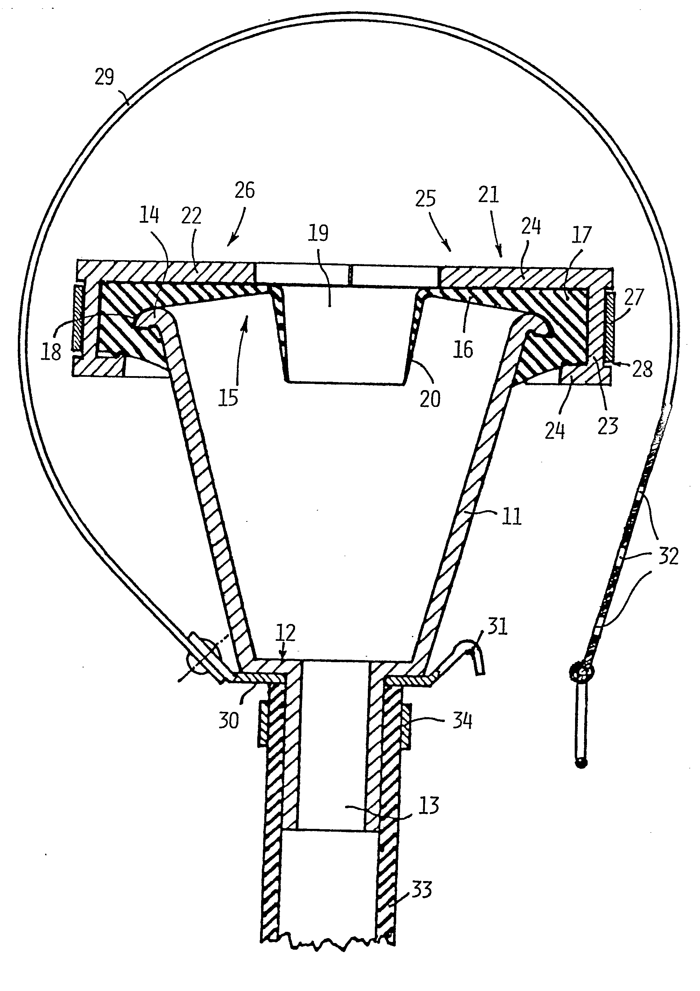

In der Zeichnung ist der Gegenstand der Erfindung anhand eines bevorzugten Ausfürungsbeispiels dargestellt, welches nachstehend im einzelnen näher erläutert ist. Die Zeichnung zeigt einen Axialschnitt durch eine erfindungsgemäß ausgebildete Hochdruck-Schnellanschlußkupplung.

Wie aus der Zeichnung ersichtlich, besteht die Hochdruck-Schnellanschlußkupplung zum Anschließen von Feuerlöschschläuchen an an der Außenseite glattwandige Ausläufe von Wasserhähnen von Druckwasserleitungen in Wohnhäusern u. dgl. aus einem trichterförmigen Schlauchanschlußstück 11, welches an seinem engeren, unteren Ende einen Boden 12 mit einem Schlauchanschlußstutzen 13 und an seinem oberen, weiteren Ende einen nach außen umgebogenen Rand 14 aufweist. Die obere, weitere Öffnung des trichterförmigen Schlauchanschlußstücks 11 ist mit einem aus elastischem, flexiblem Werkstoff bestehenden Dichtungselement 15 verschlossen, welches aus der elastischen Membrane 16 und dem an deren Außenumfang angeordneten Ringwulst 17 mit der nach innen gerichteten Ringnut 18, in welche der nach außen umgebogene Rand 14 des Schlauchanschlußstücks 11 eingreift, besteht. In ihrer Mitte besitzt die Membrane 16 eine Öffnung 19 zur Aufnahme des Auslaufs eines Wasserhahnes; vom Rand der Öffnung 19 aus geht die Membrane 16 in ein schurzartig in den Innenraum des Schlauchanschlußstücks 11 hineinragendes, sich konisch verjüngendes Schlauchstück 20 über, dessen Wandstärke von außen nach innen abnimmt.

Das elastische Dichtungselement 15, d.h. die Membrane 16 wie auch der Ringwulst 17 sind mittels eines Verstärkungselements 21 abgedeckt, welches aus der Ringscheibe 22 mit dem an ihrem Außenumfang angeordneten, den Ringwulst 17 umfassenden zylindrischen Bund 23 mit dem den Ringwulst 17 übergreifenden Rand 24 besteht. Das Verstärkungselement 21 ist vorteilhafterweise längs einer Axialebene in zwei Teile 25 und 26 geteilt, um das Dichtungselement 15 wie auch das Verstärkungselement 21 selbst in einfacher Weise auswechseln zu können, und zwar gegen solche mit einer größeren oder kleineren zentralen Öffnung 19. Die beiden Teile 25 und 26 des Verstärkungselements 21 sind beispielsweise mittels eines Spannbandes 27 zusammengehalten, welches in einer Nut 28 in der Außenseite des zylindrischen Bundes 23 liegt.

Um das Gehäuse an dem Wasserhahn zu befestigen, an welchen die Schnellanschlußkupplung angeschlossen werden soll, verwendet man vorteilhafterweise ein elastisches Band 29, dessen eines Ende an einer unter dem Boden 12 des Gehäuses liegenden Scheibe 30 befestigt ist, an welcher sich weiterhin ein Haken 31 befindet, an welchem das Band 29 mittels der Löcher 32 anhängbar ist, nachdem es in geeigneter Weise um den Wasserhahn herumgeschlungen worden ist. Auf den Auslaufstutzen 13 am Boden 12 des Anschlußstücks 11 ist der Feuerlöschschlauch 33 aufgesteckt und mittels einer Schlauchschelle 34 befestigt.

**Patentansprüche**

1. Hochdruck-Schnellanschlußkupplung zum Anschließen von Feuerlöschschläuchen od. dgl. an Wasserhähne von Druckwasserleitungen, bestehend aus:

a) einem trichterförmigen Schlauchanschlußstück (11) mit einem Schlauchanschlußstutzen (13) an der engeren Öffnung und mit einem nach außen umgebogenen Rand (14) an der weiteren Öffnung;

b) einem elastischen Dichtungselement (15) mit einer die weitere Öffnung des Schlauchanschlußstücks (11) abdeckenden, elastischen Membrane (16) und mit einem äußeren Ringwulst (17), der eine radial nach innen offene Ringnut (18) aufweist, in die der Rand (14) des Schlauchanschlußstücks (11) eingreift, wobei die Membrane (16) eine Mittelöffnung (19) mit einem kleineren Durchmesser als dem kleinsten Durchmesser der darin aufzunehmenden Ausläufe der Wasserhähne aufweist;

gekennzeichnet durch folgende Merkmale:

c) der Rand der Mittelöffnung (19) geht in ein schurzartig in den Innenraum des Schlauchanschlußstücks (11) hineinragendes Schlauchstück (20) über, dessen Wandstärke und dessen lichte Weite von außen nach innen abnehmen;

d) ein Verstärkungselement (21), bestehend aus einer Ringscheibe (22) mit einer Mittelöffnung, einem äußeren zylindrischen Bund (23) und einem vom zylindrischen Bund radial nach innen vorstehenden Rand (24), deckt die Membrane (16) auf deren Außenseite mit seiner Ringscheibe (22) ab und umgreift den Ringwulst (17) mit dem äußeren peripheren Randbereich der Ringscheibe (22), dem zylindrischen Bund (23) und dem von diesem nach innen ragenden Rand (24).

2. Hochdruck-Schnellanschlußkupplung nach Anspruch 1, dadurch gekennzeichnet, daß das Verstärkungselement (21) in axialer Richtung geteilt ist und die Teilstücke (25, 26) mittels Verbindungs- und Spannelementen zusammengehalten sind.

3. Hochdruck-Schnellanschlußkupplung nach Anspruch 2, dadurch gekennzeichnet, daß die Teilstücke (25, 26) des Verstärkungselements (21) mittels eines in einer Umfangsnut (28) des Verstärkungselements (21) liegenden elastischen Spannbandes (27) zusammengehalten sind.

4. Hochdruck-Schnellanschlußkupplung nach Anspruch 2, dadurch gekennzeichnet, daß die Teilstücke (25, 26) des Verstärkungselements (21) mittels eines Schnellspannverschlusses bzw. mittels Spannschrauben zusammengehalten sind.

**Revendications**

1. Accouplement à action rapide pour le raccordement d'un tuyau à incendie ou analogues à un robinet pour conduites d'eau sous pression contenant

a) une pièce en entonnoir de raccordement (11) d'un tuyau contenant, à l'orifice étroit, un ajoutoir (13) pour un tuyau et, à l'orifice large, un collet (14) replié à l'extérieur;

b) un élément d'étanchement (15) muni d'une membrane élastique (16) couvrant l'orifice large de la pièce de raccordement (11) et en outre muni d'un renflement annulaire extérieur (17) comportant une rainure annulaire (18) dirigée radialement vers l'intérieur et recevant le collet (14) de la pièce de raccordement (11), la membrane (16) ayant une ouverture centrale (19) d'un diamètre plus petit que le diamètre le plus petit du robinet à inserer là-dedans,

charactérisé en ce que

c) le bord de l'ouverture centrale (19) est continu d'une pièce de tuyau (20) saillant, comme un tablier, dans l'intérieur de la pièce de raccordement (11), et l'épaisseur de cette pièce de tuyau (20) et la portée libre de laquelle diminuent vers l'intérieur;

d) un élément de renforcement (21), composé d'un disque annulaire (22) à ouverture centrale, d'un collet cylindrique extérieur (23) et d'un bord (24) saillant du collet (23) radialement vers l'intérieur, couvre la membrane (16) par son disque annulaire (22) et entourne le renflement annulaire (17) par la partie périphérique du disque annulaire (22), son collet cylindrique (23) et par son bord (24) saillant vers l'intérieur.

2. Accouplement selon la revendication 1 caractérisé en ce que l'élément de renforcement (21) est partagé en direction radiale et que les parties (25, 26) sont tenues ensemble par des éléments de raccordement et de serrage.

3. Accouplement selon la revendication 2 caractérisé en ce que les parties (25, 26) de l'élément de renforcement (21) sont raccordées par un ruban de serrage (27) logé dans une rainure (28) à la périphérie de l'élément de renforcement (21).

4. Accouplement selon la revendication 2 caractérisé en ce que les parties (25, 26) d l'élément de renforcement (21) sont raccordées par une serrure à action rapide où par des vis de serrage.

**Claims**

1. A high-pressure rapid connection coupling for connecting fibre extinguishing hoses or the like to faucets of pressurized water pipes, said coupling comprising:

a) a funnel-shaped hose connecting piece (11) with a hose fitting piece (13) at the smaller opening and with an outwardly bent rim (14) at the larger opening:

b) an elastic sealing element (15) having an elastic membrane (16) covering the larger opening of the hose connecting piece (11) and having an outer torus (17) provided with an annular groove (18) open inwardly in a radial direction, with said rim (14) of said hose connecting piece (11) engaging in said annular groove, wherein the membrane (16) is provided with a central orifice (19) having a diameter smaller than the smallest diameter of the faucet outlets to be held therein;

characterized by the following features:

c) the edge of the central orifice (19) merges into a tube piece (20) projecting in an apron-like manner into the interior of the hose connecting piece (11), with the wall thickness and opening width thereof decreasing from the outside to the inside;

d) a reinforcing element (21), comprising a disc (22) with a central orifice, an outer cylindrical collar (23) and a lip (24) projecting radially inward from said cylindrical collar, covers the membrane (16) on its outer face with the disc (22) and embraces the torus (17) by means of the outer peripheral edge portion of said disc (22), the cylindrical collar (23) and the lip (24) projecting radially inward from said cylindrical collar.

2. A high-pressure rapid connection coupling according to claim 1, characterized in that the reinforcing element (21) is divided in an axial direction and the parts (25, 26) are held together by connecting and clamping elements.

3. A high-pressure rapid connection coupling according to claim 2, characterized in that the parts (25, 26) of the reinforcing element (21) are held together by an elastic tension band (27) situated in a peripheral groove (28) of the reinforcing element (21).

4. A high-pressure rapid connection coupling according to claim 2, characterized in that the parts (25, 26) of the reinforcing element (21) are held together by means of a quick-action clasp or by means of a clamping bolt.

0 008 000

1